**Europäisches Patentamt**

**European Patent Office**

**Office européen des brevets**

(19)

(11) **EP 1 601 048 A1**

(12) # DEMANDE DE BREVET EUROPEEN

(43) Date de publication:
**30.11.2005 Bulletin 2005/48**

(51) Int Cl.⁷: **H01Q 7/00**, H01Q 1/32,
G07C 9/00, B60R 25/00

(21) Numéro de dépôt: **04291350.9**

(22) Date de dépôt: **28.05.2004**

(84) Etats contractants désignés:
**AT BE BG CH CY CZ DE DK EE ES FI FR GB GR
HU IE IT LI LU MC NL PL PT RO SE SI SK TR**
Etats d'extension désignés:
**AL HR LT LV MK**

(71) Demandeur: **Delphi Technologies, Inc.
Troy, MI 48007 (US)**

(72) Inventeurs:
• **Coudre, Jérôme
77700 Bailly-Romainvilliers (FR)**

• **Le Moullec, Olivier
93340 Le Raincy (FR)**
• **Marier, Nicolas
75013 Paris (FR)**

(74) Mandataire: **Abello, Michel
Cabinet Peuscet,
78, avenue Raymond Poincaré
75116 Paris (FR)**

Remarques:
Revendications modifiées conformément à la règle
86 (2) CBE.

(54) **Dispositif de communication avec une antenne inductive**

(57)    Un dispositif de communication destiné à être embarqué dans un véhicule (V) comporte un générateur de signal (5) connecté à une antenne inductive (1) pour émettre un signal radiofréquence, un circuit électrique (2-3) agencé de manière à présenter un couplage inductif avec ladite antenne inductive, un composant à impédance réglable (3) inclus dans ledit circuit électrique et des moyens de commande (6) aptes à commander ledit composant à impédance réglable pour modifier sélectivement l'impédance interne dudit circuit électrique.

FIG.1

EP 1 601 048 A1

# Description

La présente invention se rapporte au domaine des communications radiofréquences au moyen d'antennes inductives, en particulier pour la mise en oeuvre de procédés de commande à distance dans les véhicules automobiles.

On connaît, par exemple d'après EP1363353, un dispositif de communication destiné à être embarqué dans un véhicule et comportant un générateur de signal connecté à une antenne inductive pour émettre un signal radiofréquence.

Dans les applications d'accès sans clé ou de démarrage sans clé, un tel dispositif de communication établit un dialogue bidirectionnel avec un identifiant électronique, qui est un émetteur-récepteur destiné à être porté par un utilisateur autorisé du véhicule et qui remplace la clé mécanique. Par l'intermédiaire du dispositif de communication, une unité centrale de commande embarquée sur le véhicule authentifie l'utilisateur et commande des moyens de condamnation/décondamnation des serrures des ouvrants, respectivement des moyens de mise en marche du moteur, lorsque l'utilisateur a été reconnu authentique. Par exemple, l'initialisation du protocole de communication peut être activée en touchant ou en actionnant la poignée extérieure de porte, ou encore par détection de la présence de la main au voisinage de la poignée extérieure de porte, pour l'accès sans clé; ou en appuyant sur un bouton de démarrage sur le tableau de bord, pour le démarrage sans clé. En variante, cette initialisation peut être déclenchée en actionnant un bouton de commande de l'identifiant électronique.

Pour la liaison depuis le dispositif de communication embarqué vers le dispositif récepteur portatif, il est courant d'utiliser un champ magnétique modulé, avec une fréquence de porteuse située dans la bande LF, MF ou HF, par exemple entre 10 kHz et 20 kHz, aux environs de 125 kHz, aux environs de 6 MHz ou encore aux environs de 13 MHz, en fonction des fréquences autorisées.

Dans un tel véhicule, pour des raisons de sécurité, il est nécessaire de tenir compte de la position du dispositif récepteur portatif lors de différentes étapes du procédé de commande. Par exemple, il est préférable de n'autoriser le démarrage du véhicule que si le dispositif récepteur portatif se trouve à l'intérieur du véhicule et, a contrario, de n'autoriser la condamnation des portières, respectivement du haillon de coffre, que si le dispositif récepteur portatif se trouve à l'extérieur de l'habitacle du véhicule, respectivement de son coffre. Quant à la décondamnation des serrures, celle-ci ne doit être autorisée que lorsque l'utilisateur est assez près du véhicule pour être conscient du déroulement des opérations commandées, afin d'éviter une mise en oeuvre accidentelle ou frauduleuse du procédé de commande.

On a envisagé de détecter la position du récepteur portatif en utilisant une multitude d'antennes d'émission dont la zone de transmission est à chaque fois très localisée. Cette solution présente un coût d'équipement et d'installation très élevé. On a aussi envisagé de régler la zone de transmission d'une antenne en jouant sur la modulation de largeur d'impulsion du signal émis. Toutefois, cette solution requiert également un pilote d'antenne perfectionné et onéreux.

L'invention a pour but de fournir un procédé et un dispositif de communication radiofréquence offrant plusieurs zones de transmission de manière fiable et simple.

Pour cela, l'invention fournit un dispositif d'antenne comportant une antenne inductive apte à être connectée à un émetteur et/ou un récepteur de signal radiofréquence, caractérisé par le fait qu'il comporte un circuit électrique agencé de manière à présenter un couplage inductif avec ladite antenne inductive et un composant à impédance réglable inclus dans ledit circuit électrique pour permettre de modifier sélectivement l'impédance interne dudit circuit électrique.

En d'autres termes, le circuit électrique et l'antenne inductive présentent une inductance mutuelle significative par rapport à l'inductance propre de l'antenne inductive, c'est-à-dire qu'au moins une partie significative du flux magnétique à travers l'antenne inductive traverse également le circuit électrique. Ainsi, par l'intermédiaire d'un réglage de l'impédance du circuit électrique qui est couplé de manière inductive à l'antenne, il est possible de modifier les caractéristiques de l'antenne telles qu'elles sont vues par l'émetteur ou le récepteur auquel elle est reliée, notamment son impédance globale, son gain et sa fréquence de résonance.

Tout circuit électrique capable de couper un flux magnétique peut être utilisé, notamment un circuit passif. Avantageusement, ledit circuit électrique comprend un conducteur électrique en forme de boucle, par exemple un câble à une ou plusieurs spires, dont les deux extrémités sont respectivement reliées à deux bornes de connexion dudit composant à impédance réglable.

Comme composant à impédance réglable, on peut utiliser un composant ayant une caractéristique électrique continûment réglable, par exemple un condensateur variable. De préférence, le composant à impédance réglable comporte un dispositif de commutation, par exemple un ou plusieurs relais de contact, qui est commutable dans plusieurs états distincts correspondant à plusieurs valeurs d'impédance dudit circuit électrique. Un tel dispositif de commutation est particulièrement simple à commander de manière automatique.

De préférence, le dispositif de commutation présente au moins un état ouvert, c'est-à-dire un état dans lequel l'impédance interne du circuit est quasi-infinie. Un tel état permet de sensiblement neutraliser l'influence du circuit électrique sur l'antenne inductive, et donc d'utiliser l'antenne inductive avec ses caractéristiques intrinsèques. Avantageusement, ces caractéristiques intrinsèques pourront être adaptées au circuit émetteur ou récepteur pour fournir un gain nominal à une fréquence de communication choisie.

Selon un mode de réalisation particulier, le dispositif de commutation présente au moins un état fermé en court-circuit, c'est-à-dire un état dans lequel l'impédance interne du circuit est très faible.

Avantageusement, le dispositif de commutation présente au moins un état dans lequel ledit circuit électrique est fermé par l'intermédiaire d'un condensateur. Un tel état permet de modifier la fréquence de résonance de l'antenne par injection ou prélèvement de puissance réactive.

De préférence dans ce cas, le dispositif de commutation présente au moins deux états dans chacun desquels ledit circuit électrique est fermé par l'intermédiaire d'un condensateur de capacité différente. Ainsi, on obtient facilement plusieurs niveaux de gain bien déterminés pour l'antenne inductive en couplage inductif avec le circuit électrique.

L'antenne inductive peut être de tout type, par exemple une boucle conductrice à une ou plusieurs spires ou une bobine avec ou sans noyau. De préférence, ladite antenne inductive comporte une boucle conductrice s'étendant le long d'une paroi d'un véhicule, par exemple le long du plancher, du pavillon, d'une portière, ou d'une paroi latérale du véhicule. Un tel agencement de l'antenne permet de couvrir une zone de transmission importante, s'étendant notamment sur tout ou partie de l'espace intérieur du véhicule. Selon un mode de réalisation particulier, l'antenne inductive comporte une boucle conductrice agencée autour d'un habitacle et/ou d'un coffre de véhicule.

De préférence, l'antenne inductive comporte une boucle conductrice et ledit circuit électrique comprend un conducteur électrique s'étendant à proximité immédiate de ladite boucle sur une majeure partie du contour de celle-ci. On réalise ainsi un couplage optimal entre l'antenne et le circuit électrique sans nécessairement recourir à un noyau magnétique. Cet agencement peut être réalisé de manière particulièrement économique, par exemple au moyen de deux câbles conducteurs accolés que l'on peut ainsi tirer ensemble dans les passages réservés à cet effet, notamment avec les torons ou faisceaux d'alimentation préexistants, lors de la mise en place du dispositif d'antenne dans le véhicule.

L'invention fournit également un dispositif de communication destiné à être embarqué dans un véhicule et comportant un générateur de signal connecté à une antenne inductive pour émettre un signal radiofréquence, caractérisé par le fait qu'il comporte un circuit électrique agencé de manière à présenter un couplage inductif avec ladite antenne inductive, un composant à impédance réglable inclus dans ledit circuit électrique et des moyens de commande aptes à commander ledit composant à impédance réglable pour modifier sélectivement l'impédance interne dudit circuit électrique.

Selon un mode de réalisation préféré, le composant à impédance réglable présente un état dans lequel l'antenne inductive présente un gain nominal et au moins un état dans lequel l'antenne inductive présente un gain affaibli.

L'invention fournit aussi un procédé de communication radiofréquence, dans lequel on alimente une antenne inductive avec un signal radiofréquence à émettre, caractérisé par les étapes consistant à réaliser un couplage inductif entre ladite antenne inductive et un circuit électrique et régler sélectivement l'impédance interne dudit circuit électrique pour modifier le gain de ladite antenne inductive.

Selon un mode de réalisation particulier, on émet au moins deux signaux avec deux gains d'antenne différents correspondant à deux réglages différents de ladite impédance. On peut ainsi moduler l'amplitude du signal émis de manière particulièrement simple, notamment au moyen d'un circuit entièrement passif.

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés. Sur ces dessins :

- la figure 1 est une vue schématique de dessus d'un véhicule muni d'un dispositif de communication selon un premier mode de réalisation de l'invention,
- la figure 2 est un schéma électrique d'un composant à impédance variable utilisable dans une variante du dispositif de communication de la figure 1,
- la figure 3 est un schéma électrique équivalent de l'antenne inductive reliée à un générateur de signal et du circuit électrique en couplage inductif avec celle-ci,
- la figure 4 représente un schéma électrique équivalent d'un dispositif de communication selon un deuxième mode de réalisation de l'invention.

Dans toutes les figures, les mêmes chiffres de référence désignent des éléments identiques ou similaires.

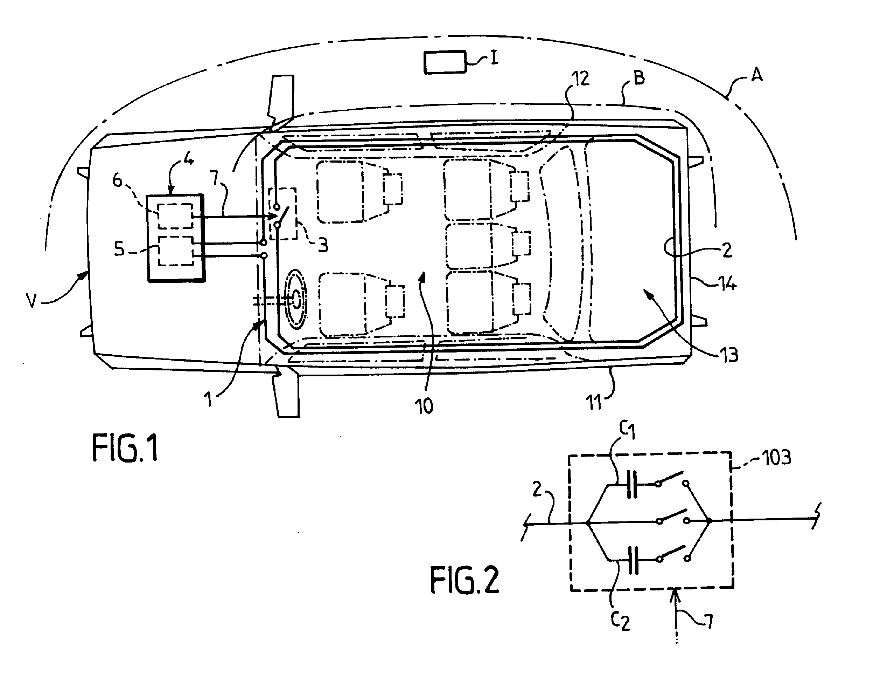

En référence à la figure 1, un véhicule automobile V est représenté en vue de dessus et le contenu de son espace intérieur est esquissé en transparence. L'espace intérieur inclut une portion habitable 10 et une portion de coffre 13. L'espace intérieur est délimité par des parois latérales de carrosserie 11 et 12, incluant les portières avant et arrière, un tablier avant (non représenté) qui le sépare du moteur, une paroi arrière 14, une paroi de plancher et généralement une paroi de pavillon.

Le véhicule V est équipé d'un système d'accès et de démarrage sans clés comportant une unité centrale embarquée 4 et un identifiant électronique I destiné à être porté par un utilisateur autorisé du véhicule pour mettre en oeuvre un procédé d'accès ou de démarrage main libre, selon tout protocole connu. Pour la liaison depuis l'unité centrale 4 vers l'identifiant I, l'unité centrale 4 comporte un générateur de signaux 5 relié à une antenne inductive 1. L'antenne inductive 1 et le générateur de signaux 5 sont mutuellement adaptés pour émettre le signal avec un gain nominal à une fréquence de porteuse prédéterminée, par exemple 125 kHz ou 13,6 MHz.

L'antenne inductive 1 est formée d'un câble conducteur gainé, par exemple de diamètre 0,6 à 1mm, disposé en forme de boucle à une ou plusieurs spire(s) autour de l'espace habitable 10 et de l'espace du coffre 13. Par exemple, l'antenne inductive 1 est disposée au niveau de la paroi de plancher en utilisant, là où ils préexistent, les passage des torons d'alimentation des différents organes du véhicule, comme les tunnels de bas de portière par exemple. Ces passages préexistant sont complétés, le cas échéant, pour permettre d'agencer l'antenne inductive 1 d'une manière entièrement invisible pour les occupants du véhicule, ce qui est préférable du point de vue de l'ergonomie et de l'aspect. Le câble de l'antenne 1 longe ainsi la base des parois verticales délimitant l'espace intérieur, à savoir les parois latérales 11 et 12, le tablier avant et la paroi arrière 14 de la carrosserie.

En variante, l'antenne inductive 1 peut être disposé ailleurs que sur la paroi de plancher, par exemple au niveau de la paroi de pavillon du véhicule. De même, le contour de l'antenne inductive 1 peut être différent, celui-ci étant essentiellement choisi en fonction de la zone de transmission à couvrir. De préférence, le contour de l'antenne inductive 1 est choisi de manière à entourer au moins une partie de l'espace intérieur du véhicule V dans un plan horizontal ou vertical.

Pour moduler le niveau du champ magnétique émis par l'antenne inductive 1, un deuxième câble conducteur gainé 2 est accolé à l'antenne 1 le long de sensiblement tout le contour de celle-ci, de manière à présenter un couplage inductif significatif avec celle-ci. Les deux câbles 1 et 2 peuvent être torsadés ensemble pour améliorer ce couplage. Les deux extrémités du câble 2 sont reliées aux deux bornes d'un composant à impédance réglable 3, ici sous la forme d'un interrupteur, que commande un module de commande 6 intégré à l'unité centrale 4 par l'intermédiaire d'une ligne de commande 7.

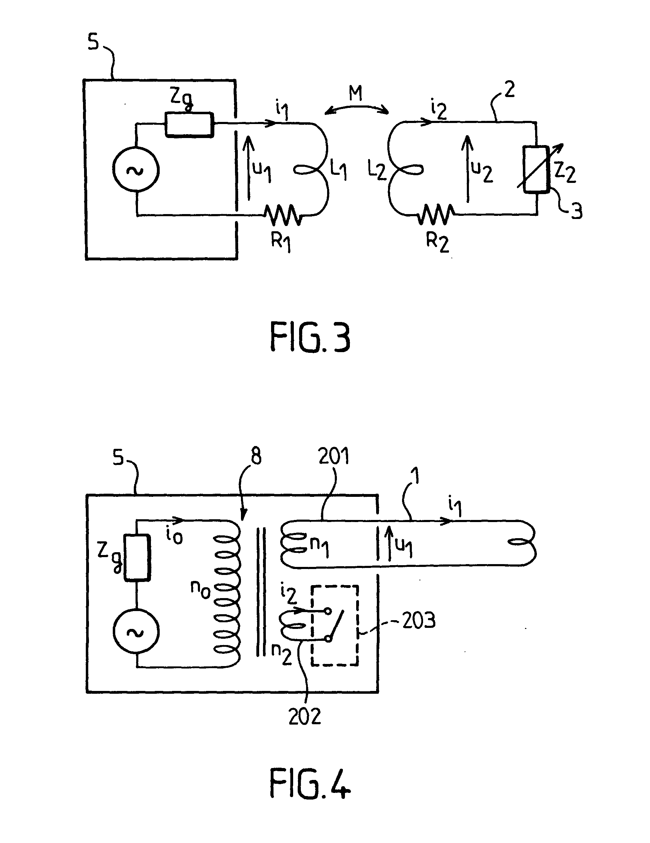

La figure 3 représente le schéma électrique équivalent de l'antenne inductive 1 reliée au générateur de signaux 5 et du câble 2 en couplage inductif avec celle-ci. L'interrupteur 3 est représenté sous la forme générique d'un composant dont l'impédance $Z_2$ peut être modifiée. Le pilote d'antenne est représenté à titre illustratif sous la forme d'un générateur de tension avec une impédance de sortie $Z_g$. On appelle $u_1$ la tension de sortie du générateur 5, $i_1$ le courant circulant dans l'antenne inductive 1, $i_2$ le courant circulant dans le câble 2 et $u_2$ la tension aux bornes du composant à impédance réglable 3.

Les équations du circuit sont :

$$u_1(t) = R_1 i_1(t) + L_1 \frac{di_1(t)}{dt} - M \frac{di_2(t)}{dt}$$

$$u_2(t) = -R_2 i_2(t) - L_2 \frac{di_2(t)}{dt} + M \frac{di_1(t)}{dt}$$

$$u_2(t) = Z_2 i_2(t)$$

où $R_1$ et $L_1$ désignent respectivement la résistance propre et l'inductance propre de l'antenne inductive 1, $R_2$ et $L_2$ désignent respectivement la résistance propre et l'inductance propre du câble conducteur en boucle 2, et $M$ désigne l'inductance mutuelle entre l'antenne inductive 1 et le câble 2. En pratique $R_1$ et $R_2$ peuvent être petits ou négligeables.

Lorsque l'interrupteur 3 est ouvert, le courant $i_2$ est nul, du moins tant que la fréquence est suffisamment basse pour négliger l'effet capacitif de l'interrupteur ouvert. L'influence du conducteur 2 sur l'antenne 1 est donc sensiblement supprimée. L'antenne 1 fonctionne alors selon ses caractéristiques intrinsèques. Dans cet état, l'antenne 1 présente un gain nominal. La ligne mixte A représente schématiquement la limite de la zone de transmission obtenue dans cet état, dont on a représenté qu'une moitié. Cette zone s'étend par exemple à environ 2 mètres de distance tout autour du véhicule V.

Lorsque l'interrupteur 3 est fermé, la tension $u_2$ est sensiblement nulle et le courant $i_2$ est maximal. L'influence du conducteur 2 sur l'antenne 1 est donc maximale. Cela signifie que, vue par le générateur de signaux 5, l'antenne 1 couplée au conducteur 2 présente une impédance et une fréquence de résonance qui sont modifiées, et qui ne sont plus adaptées aux caractéristiques internes du générateur de signaux 5, de sorte qu'elle présente un gain affaibli. La ligne mixte B représente schématiquement la limite de la zone de transmission obtenue dans cet état, dont on a représenté qu'une moitié. Cette zone réduite couvre par exemple essentiellement l'intérieur du véhicule V.

On voit donc que la commande de l'interrupteur 3 offre un moyen très simple de modifier le niveau du champ émis par l'antenne inductive 1. Ceci permet d'obtenir plusieurs zones de transmission concentriques avec une seule antenne. Par exemple, on peut utiliser la zone de transmission A pour effectuer le dialogue avec l'identifiant I afin d'autoriser l'accès au véhicule V et utiliser la zone de transmission B pour effectuer le dialogue avec l'identifiant I afin d'autoriser le démarrage du véhicule V. L'existence de deux zones de transmission ou plus permet de localiser l'identifiant I avant d'exécuter une action, afin par exemple de s'assurer que l'identifiant I se trouve dans la zone A mais pas dans la zone B avant de condamner les serrures du véhicule.

Une autre application consiste à utiliser la modulation du niveau de champ émis comme protection contre les tentatives de piratage du système d'accès sans clés par l'intermédiaire de relais, décrites par exemple dans FR 2808550. Dans ce cas, au cours de l'émission d'un message d'interrogation depuis le véhicule V vers l'identifiant I, le module de commande 6 modifie la position de l'interrupteur 3, de manière à émettre des signaux avec deux niveaux différents. L'identifiant I est conçu pour mesurer le niveau du champ qu'il reçoit et programmé pour reconnaître comme authentique un message présentant deux niveaux de signal tombant dans des plages prédéterminées, lesquelles ont été définies en fonction des deux niveaux de gain de l'antenne 1 et de la portée de communication souhaitée. Ainsi, un relais qui ne reproduit pas les différents niveaux du signal venant du véhicule V n'est pas capable de tromper l'identifiant I.

Pour fournir davantage de niveaux de signal, ou plus de zones de transmission distinctes, on prévoit un composant à impédance réglable ayant un plus grand nombre d'états. Dans l'exemple représenté sur la figure 2, le composant à impédance réglable 103 comporte trois relais à contact commandés par l'intermédiaire de la ligne de commande 7 et permettant de fermer le câble 2 soit en court-circuit, soit par l'intermédiaire d'un condensateur de capacité $C_1$, soit par l'intermédiaire d'un condensateur de capacité $C_2$. Les capacités $C_1$ et $C_2$ sont choisies à chaque fois de manière à décaler la fréquence de résonance de l'antenne inductive 1 d'un niveau déterminé, c'est-à-dire à désaccorder l'antenne, par exemple de 10 ou 20 kHz pour une antenne initialement accordée à 125kHz. Lorsque tous les relais sont ouverts, l'influence du circuit formé par le câble 2 et le composant 3 sur l'antenne inductive 1 est sensiblement supprimée.

Dans le premier mode de réalisation décrit ci-dessus, l'antenne 1 et le câble conducteur 2 sont des boucles « à air » couplées du fait de leur proximité. On peut aussi, comme dans le mode de réalisation représenté sur la figure 4, prévoir un noyau magnétique pour coupler l'antenne inductive 1 à un circuit dont l'impédance est réglable.

Dans ce mode de réalisation, le générateur de signaux 5 comporte un transformateur électrique 8 dont l'enroulement primaire présente $n_0$ spires et est relié à une source de tension ayant une impédance de sortie $Z_g$ et faisant circuler un courant désigné par $i_0$. L'antenne inductive présente une partie extérieure au générateur de signaux 5, constituée par exemple du câble 1 décrit plus haut, qui est reliée en série avec un enroulement secondaire 201 présentant $n_1$ spires, à l'intérieur du générateur de signaux 5. La résistance interne de l'antenne n'a pas été représentée. Le transformateur 8 permet notamment de réaliser l'adaptation d'impédance entre la source de tension et l'antenne inductive. Un troisième enroulement 202 présentant $n_2$ spires est relié en série avec un composant à impédance réglable 203, par exemple un interrupteur, commandé par l'unité centrale. Par l'intermédiaire du noyau du transformateur 8, par exemple constitué de ferrite, le troisième enroulement 202 est couplé de manière inductive avec l'enroulement secondaire 201. Avec une convention de signe appropriée, le théorème d'Ampère se traduit par la relation suivante:

$$n_0 i_0 + n_1 i_1 + n_2 i_2 \approx 0$$

Lorsque l'impédance du composant 203 est très haute, le courant $i_2$ est sensiblement nul et donc son influence sur le courant $i_1$ circulant dans l'antenne inductive 1 est minimisée. Lorsque l'impédance du composant 203 est réglée à un bas niveau, par exemple par court-circuit, le courant $i_2$ est maximisé et son influence sur le courant $i_1$ aussi.

Ainsi, en réalisant un couplage inductif entre une antenne inductive, c'est-à-dire du moins une partie de celle-ci, et un circuit électrique dont on peut modifier l'impédance interne, et qui peut être agencé à l'intérieur ou à l'extérieur du générateur de signal relié à l'antenne, plusieurs niveaux de gain d'antenne, et donc plusieurs zones de transmission correspondantes, sont obtenus de manière simple et fiable.

Le même procédé peut bien sûr être employé pour modifier le gain d'une antenne réceptrice.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

**Revendications**

1. Dispositif d'antenne comportant une antenne inductive (1, 201) apte à être connectée à un émetteur (5) et/ou un récepteur de signal radiofréquence, **caractérisé par le fait qu'**il comporte un circuit électrique (2-3, 2-103, 202-203) agencé de manière à présenter un couplage inductif avec ladite antenne inductive et un composant à impédance réglable (3, 103, 203) inclus dans ledit circuit électrique pour permettre de modifier sélectivement l'impédance interne dudit circuit électrique.

2. Dispositif d'antenne selon la revendication 1, **caractérisé par le fait que** ledit circuit électrique est passif.

3. Dispositif d'antenne selon la revendication 1 ou 2, **caractérisé par le fait que** ledit circuit électrique comprend un conducteur électrique (2) en forme de boucle, dont les deux extrémités sont respectivement reliées à deux bornes de connexion dudit composant à impédance réglable.

**4.** Dispositif d'antenne selon l'une des revendications 1 à 3, **caractérisé par le fait que** le composant à impédance réglable (3, 103, 203) comporte un dispositif de commutation commutable dans plusieurs états distincts correspondant à plusieurs valeurs d'impédance dudit circuit électrique.

**5.** Dispositif d'antenne selon la revendication 4, **caractérisé par le fait que** ledit dispositif de commutation présente au moins un état ouvert.

**6.** Dispositif d'antenne selon la revendication 4 ou 5, **caractérisé par le fait que** ledit dispositif de commutation présente au moins un état fermé en court-circuit.

**7.** Dispositif d'antenne selon l'une des revendications 4 à 6, **caractérisé par le fait que** ledit dispositif de commutation présente au moins un état dans lequel ledit circuit électrique est fermé par l'intermédiaire d'un condensateur ($C_1$).

**8.** Dispositif d'antenne selon la revendication 7, **caractérisé par le fait que** ledit dispositif de commutation présente au moins deux états dans chacun desquels ledit circuit électrique est fermé par l'intermédiaire d'un condensateur de capacité différente ($C_1$, $C_2$).

**9.** Dispositif d'antenne selon l'une des revendications 1 à 8, **caractérisé par le fait que** ladite antenne inductive (1) comporte une boucle conductrice s'étendant le long d'une paroi d'un véhicule.

**10.** Dispositif d'antenne selon l'une des revendications 1 à 9, **caractérisé par le fait que** ladite antenne inductive comporte une boucle conductrice agencée autour d'un habitacle (10) et/ou d'un coffre (13) de véhicule.

**11.** Dispositif d'antenne selon l'une des revendications 1 à 10, **caractérisé par le fait que** ladite antenne inductive comporte une boucle conductrice (1) et ledit circuit électrique comprend un conducteur électrique (2) s'étendant à proximité immédiate de ladite boucle sur une majeure partie du contour de celle-ci.

**12.** Dispositif de communication destiné à être embarqué dans un véhicule (V) et comportant un générateur de signal (5) connecté à une antenne inductive (1, 201) pour émettre un signal radiofréquence, **caractérisé par le fait qu'**il comporte un circuit électrique (2-3, 2-103, 202-203) agencé de manière à présenter un couplage inductif avec ladite antenne inductive, un composant à impédance réglable (3, 103, 203) inclus dans ledit circuit électrique et des moyens de commande (6) aptes à commander ledit composant à impédance réglable pour modifier sélectivement l'impédance interne dudit circuit électrique.

**13.** Dispositif de communication selon la revendication 12, **caractérisé par le fait que** ledit composant à impédance réglable présente un état dans lequel l'antenne inductive présente un gain nominal et au moins un état dans lequel l'antenne inductive présente un gain affaibli.

**14.** Procédé de communication radiofréquence, dans lequel on alimente une antenne inductive (1, 201) avec un signal radiofréquence à émettre, **caractérisé par** les étapes consistant à :

réaliser un couplage inductif entre ladite antenne inductive et un circuit électrique (2-3, 2-103, 202-203),
régler sélectivement l'impédance interne dudit circuit électrique pour modifier le gain de ladite antenne inductive.

**15.** Procédé selon la revendication 14, dans lequel on émet au moins deux signaux avec deux gains d'antenne différents correspondant à deux réglages différents de ladite impédance.

**Revendications modifiées conformément à la règle 86(2) CBE.**

**1.** Dispositif d'antenne comportant une antenne inductive (1, 201) apte à être connectée à un émetteur (5) et/ou un récepteur de signal radiofréquence, ledit dispositif d'antenne comportant un circuit électrique (2-3, 2-103, 202-203) agencé à demeure par rapport à ladite antenne inductive et un composant à impédance réglable (3, 103, 203) inclus dans ledit circuit électrique pour permettre de modifier sélectivement l'impédance interne dudit circuit électrique, **caractérisé par le fait que** ledit circuit électrique est agencé de manière à présenter un couplage inductif avec ladite antenne inductive.

**2.** Dispositif d'antenne selon la revendication 1, **caractérisé par le fait que** ledit circuit électrique est passif.

**3.** Dispositif d'antenne selon la revendication 1 ou 2, **caractérisé par le fait que** ledit circuit électrique comprend un conducteur électrique (2) en forme de boucle, dont les deux extrémités sont respectivement reliées à deux bornes de connexion dudit composant à impédance réglable.

**4.** Dispositif d'antenne selon l'une des revendications 1 à 3, **caractérisé par le fait que** le composant à impédance réglable (3, 103, 203) comporte un dispositif de commutation commutable dans plusieurs états distincts correspondant à plusieurs valeurs d'impédance dudit circuit électrique.

**5.** Dispositif d'antenne selon la revendication 4, **caractérisé par le fait que** ledit dispositif de commutation présente au moins un état ouvert.

**6.** Dispositif d'antenne selon la revendication 4 ou 5, **caractérisé par le fait que** ledit dispositif de commutation présente au moins un état fermé en court-circuit.

**7.** Dispositif d'antenne selon l'une des revendications 4 à 6, **caractérisé par le fait que** ledit dispositif de commutation présente au moins un état dans lequel ledit circuit électrique est fermé par l'intermédiaire d'un condensateur ($C_1$).

**8.** Dispositif d'antenne selon la revendication 7, **caractérisé par le fait que** ledit dispositif de commutation présente au moins deux états dans chacun desquels ledit circuit électrique est fermé par l'intermédiaire d'un condensateur de capacité différente ($C_1$, $C_2$).

**9.** Dispositif d'antenne selon l'une des revendications 1 à 8, **caractérisé par le fait que** ladite antenne inductive (1) comporte une boucle conductrice s'étendant le long d'une paroi d'un véhicule.

**10.** Dispositif d'antenne selon l'une des revendications 1 à 9, **caractérisé par le fait que** ladite antenne inductive comporte une boucle conductrice agencée autour d'un habitacle (10) et/ou d'un coffre (13) de véhicule.

**11.** Dispositif d'antenne selon l'une des revendications 1 à 10, **caractérisé par le fait que** ladite antenne inductive comporte une boucle conductrice (1) et ledit circuit électrique comprend un conducteur électrique (2) s'étendant à proximité immédiate de ladite boucle sur une majeure partie du contour de celle-ci.

**12.** Dispositif de communication destiné à être embarqué dans un véhicule (V) et comportant un dispositif d'antenne selon l'une des revendications 1 à 11 et un générateur de signal (5) connecté à ladite antenne inductive (1, 201) pour émettre un signal radiofréquence, **caractérisé par le fait qu'**il comporte des moyens de commande (6) aptes à commander ledit composant à impédance réglable pour modifier sélectivement l'impédance interne dudit circuit électrique.

**13.** Dispositif de communication selon la revendication 12, **caractérisé par le fait que** ledit composant à impédance réglable présente un état dans lequel l'antenne inductive présente un gain nominal et au moins un état dans lequel l'antenne inductive présente un gain affaibli.

**14.** Procédé de communication radiofréquence, dans lequel on alimente une antenne inductive (1, 201) avec un signal radiofréquence à émettre, **caractérisé par** les étapes consistant à :

réaliser un couplage inductif entre ladite antenne inductive et un circuit électrique (2-3, 2-103, 202-203) agencé à demeure par rapport à ladite antenne inductive,
régler sélectivement l'impédance interne dudit circuit électrique pour modifier le gain de ladite antenne inductive.

**15.** Procédé selon la revendication 14, dans lequel on émet au moins deux signaux avec deux gains d'antenne différents correspondant à deux réglages différents de ladite impédance.

FIG.1

FIG.2

EP 1 601 048 A1

FIG.3

FIG.4

**Office européen
des brevets**

**RAPPORT DE RECHERCHE EUROPEENNE**

Numéro de la demande

EP 04 29 1350

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| D,X | EP 1 363 353 A (DELPHI TECH INC) 19 novembre 2003 (2003-11-19) * revendications 1,12; figures 1,2 * * colonne 10, ligne 58 - colonne 11, ligne 35 * ----- | 1-15 | H01Q7/00 H01Q1/32 G07C9/00 B60R25/00 |
| X | US 5 905 444 A (ZIMMER HERBERT) 18 mai 1999 (1999-05-18) * figures 1,3,4 * * colonne 3, ligne 12 - ligne 19 * * colonne 3, ligne 25 - ligne 38 * * colonne 4, ligne 48 - colonne 5, ligne 3 * * colonne 7, ligne 5 - ligne 8 * ----- | 1-15 | |

**DOMAINES TECHNIQUES RECHERCHES** (Int.Cl.7)

H01Q
G07C
B60R

Le présent rapport a été établi pour toutes les revendications

| Lieu de la recherche | Date d'achèvement de la recherche | Examinateur |
|---|---|---|
| Berlin | 20 décembre 2004 | Fouasnon, O |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...........................................................................................
& : membre de la même famille, document correspondant

EPO FORM 1503 03.82 (P04C02)

**EP 1 601 048 A1**

**ANNEXE AU RAPPORT DE RECHERCHE EUROPEENNE
RELATIF A LA DEMANDE DE BREVET EUROPEEN NO.**

EP 04 29 1350

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

20-12-2004

| Document brevet cité au rapport de recherche | | Date de publication | Membre(s) de la famille de brevet(s) | | Date de publication |
|---|---|---|---|---|---|
| EP 1363353 | A | 19-11-2003 | FR | 2839785 A1 | 21-11-2003 |
| | | | EP | 1363353 A1 | 19-11-2003 |
| | | | EP | 1363354 A1 | 19-11-2003 |
| US 5905444 | A | 18-05-1999 | DE | 19541855 C1 | 20-02-1997 |
| | | | FR | 2741021 A1 | 16-05-1997 |
| | | | GB | 2307146 A ,B | 14-05-1997 |

EPO FORM P0460

Pour tout renseignement concernant cette annexe : voir Journal Officiel de l'Office européen des brevets, No.12/82